Europäisches Patentamt

European Patent Office

Office européen des brevets

(11) Veröffentlichungsnummer: 0 262 632
A2

(19)

(12) # EUROPÄISCHE PATENTANMELDUNG

(21) Anmeldenummer: 87114103.2

(22) Anmeldetag: 26.09.87

(51) Int. Cl.⁴: G01T 1/18

(30) Priorität: 02.10.86 DE 3633498

(43) Veröffentlichungstag der Anmeldung:
06.04.88 Patentblatt 88/14

(84) Benannte Vertragsstaaten:
AT BE CH DE ES FR GB IT LI NL SE

(71) Anmelder: Standard Elektrik Lorenz
Aktiengesellschaft
Lorenzstrasse 10
D-7000 Stuttgart 40(DE)

(72) Erfinder: Foth, Reinhard
Appelhof 13
D-5840 Schwerte(DE)
Erfinder: Rohmund, Achim
Löttringserweg 22
D-5990 Altona 8(DE)

(74) Vertreter: Pohl, Heribert, Dipl.-Ing et al
Standard Elektrik Lorenz AG Patent- und
Lizenzwesen Postfach 30 09 29
D-7000 Stuttgart 30(DE)

(54) Strahlungsmessgerät zur Messung einer ionisierenden Strahlung.

(57) Die Ratemeteranordnung (3) eines Strahlungsmeßgerätes zur Messung einer ionisierenden
Strahlung (1) enthält neben einer Torschaltung (6)
und einer Zähleranordnung (12) zur Messung der
Impulsrate der von einer Strahlunsdetektoranordnung
(2) unter der Einwirkung der ionisierenden Strahlung
erzeugten Zählimpulse und neben einem Mittelwertspeicher (8) zur Speicherung des Mittelwertes (Rm)
der gemessenen Impulsrate zusätzlich eine Rechenanordnung (15) und eine Ablaufsteueranordnung
(10). Mittels der Ablaufsteueranordnung (10) und der
Rechenanordnung (15) wird der Mittelwert (Rm) im
Mittelwertspeicher (8) laufend so erneuert, daß er
geringe Schwankungen seines Wertes aufweist. Die
Anzeige einer von dem Mittelwertspeicher (8) gespeiste Anzeigeanordnung (4) weist somit ebenfalls
geringe Schwankungen auf.

## Strahlungsmeßgerät zur Messung einer ionisierenden Strahlung

Die Erfindung betrifft ein Strahlungsmeßgerät nach dem Oberbegriff des Anspruches 1.

Die Strahlungsdetektoren derartiger Strahlungsmeßgeräte erzeugen unter der Einwirkung einer ionisierenden Strahlung Zählimpulse einer statistischen Verteilung. Die Impulsrate dieser Zählimpulse entspricht der Dosisleistung der ionisierenden Strahlung am Ort des Strahlungsdetektors. Für die Messung der Impulsrate wird die Anzahl der von dem Strahlungsdetektor erzeugten Zählimpulse innerhalb eines vorgegebenen Zählzeitabschnittes ermittelt. Wegen der statistischen Verteilung der Zählimpulse wird im allgemeinen während der einzelnen Zählzeitabschnitte für die Messung der Impulsrate jeweils ein unterschiedlicher Wert der Impulsrate gemessen. Die Unterschiede der Werte der einzelnen Messungen sind um so größer je kleiner die Zählzeitabschnitte für die Messung der einzelnen Impulsrate bemessen ist. Für eine Anzeige der Impulsraten oder des daraus ermittelten Wertes der Dosisleistung sollen die Unterschiede der einzelnen Messungen so klein sein, daß ihre Schwankung die Anzeige nicht stört. Das bedeutet aber für die Anzeige verhältnismäßig kleiner Dosisleistungen, daß die Zählzeitabschnitte für die Impulsraten mit geringer Schwankung sehr lange, teilweise über mehrere Minuten Dauer bemessen werden müssen. Dadurch geht jedoch die Aktualität der Messung an sich verloren. Um diese Aktualität der Messung zu erhalten, dürfen die Zählzeitabschnitte nicht länger als einige Sekunden bemessen werden.

Um dennoch zu einer einigermaßen beruhigten Anzeige zu kommen, ist es aus der DE-OS 28 52 973 bekannt, in einem Strahlungsmeßgerät der eingangs angegebenen Art den Wert der momentan gemessenen Zählrate mit einem Bezugswert zu vergleichen, der kennzeichnend für einen in einem vorhergehenden Zählzeitabschnitt gemessenen Wert einer Impulsrate ist. Die Anzeige des bekannten Strahlungsmeßgerätes wird nur dann geändert, wenn sich die Werte der momentan gemessenen Impulsraten mehrmals hintereinander im selben Sinn von dem Bezugswert unterscheiden.

Der Erfindung liegt die Aufgabe zugrunde, ein Strahlungsmeßgerät nach dem Oberbegriff des Anspurchs 1 so auszugestalten, daß mit möglichst einfachen Mitteln und mit einem geringst möglichen Aufwand an Speicherplätzen eine weitgehende Beruhigung der Anzeige der Impulsrate bzw. des Wertes der zugehörigen Dosisleistung der ionisierenden Strahlung erreicht wird. Diese Aufgabe wird nach der Erfindung durch die im kennzeichnenden Teil des Anspruches 1 angegebenen Merkmale gelöst.

Durch die Maßnahmen der Erfindung wird neben dem ohnehin benötigten Speicherplatz für den Wert einer mittleren Impulsrate kein zusätzlicher Speicherplatz benötigt. Außerdem wird für den Funktionsablauf zur Bildung eines wenig - schwankenden Wertes einer mittleren Impulsrate eine Programmschaltung mit nur wenigen Steuerschritten benötigt, von denen einer der Steuerschritte zusätzlich den Wechsel der Anzeige der Anzeigeanordnung steuern kann. Es werden somit für die Bildung eines schwankungsarmen Wertes einer mittleren Impulsrate nur wenige Bestandteile eines Mikroprozessors in Anspruch genommen. Mit den Maßnahmen nach dem Anspruch 2 wird eine besonders vorteilhafte Rechenschaltung erreicht, die mit verhältnismäßig wenig Aufwand an Rechenschaltungsmitteln eine wirksame Beruhigung des Wertes der mittleren Impulsrate herbeiführt.

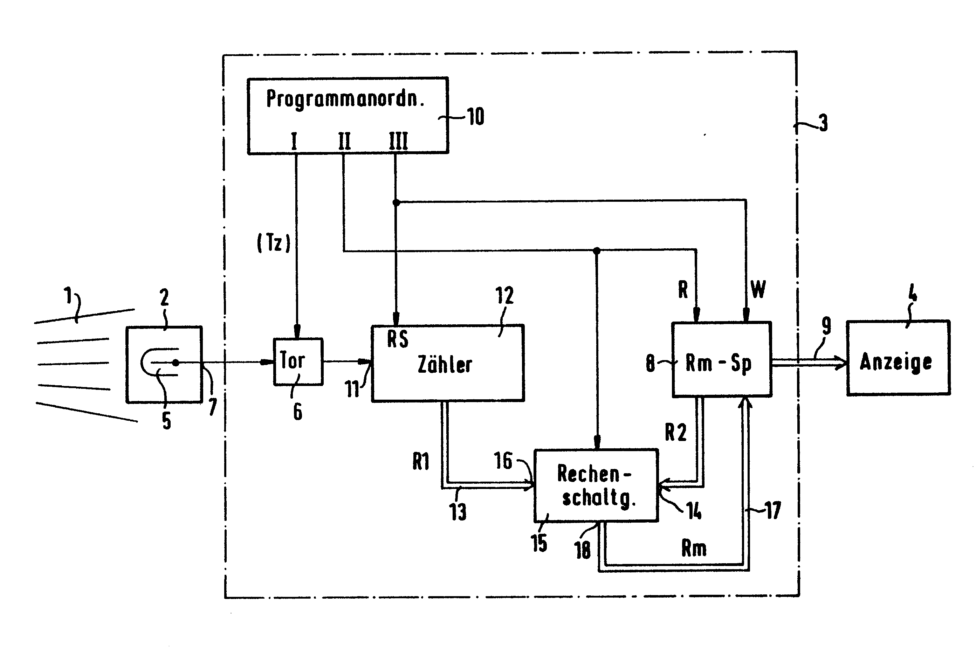

Die Erfindung wird nachfolgend anhand eines vorteilhaften Ausführungsbeispieles näher erläutert. Die einzige Figur der zugehörigen Zeichnung zeigt ein Blockschaltbild eines für die Messung einer ionisierenden Strahlung 1 vorgesehenen Strahlungsmeßgerätes mit einer Strahlungsdetektoranordnung 2, einer Ratemeteranordnung 3 und einer Anzeigeanordnung 4. Die Strahlungsdetektoranordnung 2 enthält einen Strahlungsdetektor 5, der unter dem Einfluß der ionisierenden Strahlung 1 an seinem Ausgang Zählimpulse mit einer zeitlichen statistischen Verteilung erzeugt. Der mittlere Wert der Impulsrate dieser Zählimpulse entspricht der Dosisleistung der ionisierenden Strahlung 1 am Meßort der Strahlungsdetektoranordnung 2.

In der Ratemeteranordnung 3 wird aus den an einer Torschaltung 6 der Ratemeteranordnung einlaufenden Zählimpulsen des Signalausganges 7 der Strahlungsdetektoranordnung 2 ein Mittelwert der aus den in der Ratemeteranordnung gemessenen momentanen Impulsraten ermittelt und in einem Mittelwertspeicher 8 gespeichert. Der gespeicherte Mittelwert Rm gelangt über eine Datenleitung 9 vom Mittelwertspeicher 8 in die Anzeigeanordnung 4, die aus dem Mittelwert Rm den dem Mittelwert Rm entsprechenden Wert der am Ort der Strahlungsdetektoranordnung 2 gemessenen Dosisleistung der ionisierenden Strahlung 1 ermittelt und anzeigt. Zur Ermittlung dieses Mittelwertes Rm enthält die Ratemeteranordnung 3 eine Ablaufsteueranordnung 10, die die Ratemeteranordnung mit drei nacheinander ablaufenden Steuerschritten I, II und III steuert. Während des ersten Steuerschrittes I erzeugt die Ablaufsteueranordnung während der gesamte Dauer eines Zählzeitabschnittes Tz ein Torsignal, das das Tor 6 am Eingang der Ratemeteranordnung 3 durchlässig steuert. Dadurch gelangen die Zählimpulse vom Signalausgang 7 der Strahlungsdetektoranordnung 2 an einen Zähleingang 11 einer Zähleranordnung 12, die die Zählimpulse bis zum Ende des Zählzeitabschnittes Tz aufsummiert und die Impulssumme als Wert R1 der momentan gemessenen Zählrate auf eine Datenleitung 13 gibt. Nach dem Ablauf des Zählzeitabschnittes Tz erzeugt die Ablaufsteueranordnung in einem zweiten Steuerschritt II ein Steuersignal R, das den Mittelwertspeicher 8 zur Ausgabe des gespeicherten Mittelwertes als Rechenwert R2 an den zweiten Dateneingang 14 einer Rechenanordnung 15 veranlaßt. Außerdem löst dieser Befehl in der Rechenanordnung 15 die Berechnung eines Mittelwertes Rm aus den beiden an ihren Dateneingängen 14 und 16 anstehenden Rechewerten R1 und R2 nach einer durch die Ausbildung der Rechenanordnung vorgegebenen Rechenregel aus. Im dargestellten Ausführungsbeispiel ist die Rechenschaltung so ausgebildet, daß sie den vom Mittelwertspeicher erhaltenen Wert R2 der mittleren Impulsrate mit einem Wichtungsfaktor w multipliziert und diesen Wert dem Wert R1 der von der Zähleranordnung 12 ausgegebenen momentanen Impulsrate hinzuaddiert und daß sie diese Summe R1 + wR2 durch den um den Wert 1 erhöhten Wichtungsfaktor w, d.h. durch w + 1 dividiert. Die Rechenschaltung führt in dieser Ausbildung nur wenige einfach Grundrechnungen durch, so daß für die Rechenschaltung nur ein geringer Aufwand notwenig ist. Nach Abschluß der Rechnung des Mittelwertes Rm erzeugt die Ablaufsteueranordnung 10 mit einem dritten Programmschritt III ein Steuersignal W, daß den Mittelwertspeicher 8 dazu veranlaßt, anstelle des bisherigen Mittelwertes R2 den von der Rechenanordnung 15 ermittelten und an deren Datenausgang 16 anstehenden neuen Mittelwert Rm über eine Datenleitung 17 einzuspeichern. Gleichzeitig wird mit diesem Steuersignal W des dritten Steuerschrittes III die Zähleranordnung 12 an ihrem Rückstelleingang RS auf den Zählerstand 0 zurückgestellt. Nach Ablauf dieser Vorgänge beginnt das Programm der Ablaufsteueranordnung 10 selbsttätig wieder mit dem ersten Steuerschritt I.

Die Zeitdauer des Zählzeitabschnittes Tz des ersten Ablaufsteuerschrittes I der Ablaufsteueranordnung 10 ist so bemessen, daß sie gleich der für eine aktuelle Messung der Dosisleistung eines Feldes eines ionisierenden Strahlung 1 erforderlichen Zeitspanne zwischen zwei aufeinanderfolgenden Anzeigen des Meßwertes ist. Bei dieser im allgemeinen für die Ermittlung einer Impulsrate der Zählimpulse kurzen Zeit für den Zählzeitabschnitt Tz treten verhältnismäßig große Schwankungen des Wertes der momentan gemessenen Impulsraten auf. Die Art der Ausbildung der Rechenanordnung 15 und die bei jedem Steuerumlauf durchgeführte Anpassung des im Mittelwertspeicher 8 gespeicherten Mittelwertes Rm an den Wert der momentan gemessenen Zählrate führt zu einer geringen Schwankung des in dem Mittelwertspeicher 8 gespeicherten Mittelwertes Rm der mit der Ratemeteranordnung gemessenen Impulsrate vom Signalausgang 7 der Strahlungsdetektoranordnung 2. Von einem Mikroprozessor wird für die dargestellte Ratemeteranordnung 3 außer der ohnehin benötigten Torschaltung 6, der Zähleranordnung 12 und dem Mittelwertspeicher 8 und dem Steuerschritt I zusätzlich nur noch ein Anteil mit der einfachen Rechenschaltung 15 und den Steuerschritten II und III benötigt, so daß die dargestellte Ratemeteranordnung 3 nur wenige Anteile eines Mikroprozessors zusätzlich beansprucht.

## Ansprüche

1. Strahlungsmeßgerät zur Messung einer ionisierenden Strahlung mit einer Strahlungsdetektoranordnung und mit einer in einer Impulsratenmeßanordnung enthaltenen Zähleranordnung sowie mit einer Anzeigeanodnung, **dadurch gekennzeichnet,** - daß die Impulsratenanordnung (3) eine Ablaufsteueranordnung (10) enthält, die in einem ersten Steuerschritt (I) die Zähleranordnung (12) für den vorgegebenen Zählzeitabschnitt (Tz) wirksam schaltet und die in einem zweiten Steuerschritt (II) die in der Zähleranordnung gebildete Impulssumme als Momentanwert (R1) der momentan ermittelten Impulsrate einer Rechenanordnung (15) zuführt, die aus einem in einem Mittelwertspeicher (8) gespeicherten ersten Mittelwert (R2) einer aus vorausgegangenen Momentanwertmessungen ermittelten mittleren Impulsrate und dem Momentanwert (R1) einen zweiten Mittelwert (Rm) nach einer vorbestimmten Rechenregel der Rechenanordnung bildet,
-daß in einem dritten Steuerschritt (III) der zweite Mittelwert (Rm) an die Stelle des ersten Mittelwertes in den Mittelwertspeicher gespeichert wird,
-daß die drei nacheinanderfolgenden Steuerschritte (I, II, III) von der Ablaufsteueranordnung in einem ständigen Umlauf wiederholt werden
-und daß die Anzeigeanordnung (4) an den Datenausgang (9) des Mittelwertspeichers angeschlossen ist.

2. Strahlungsmeßgerät nach Anspruch 2, dadurch gekennzeichnet, daß in der Rechenanordnung (15) der im Mittelwertspeicher (8) gespeicherte erste Mittelwert (R2) der mittleren Impulsrate mit einem Wichtungsfaktor (w) multipliziert, dieser gewichtete Wert (w × R2) zum Momentanwert (R1) der momentanen Impulsrate addiert und diese Summe (R1 + w × R2) durch den um den Wert 1 erhöhten Wichtungsfaktor (w) dividiert wird.

Anzeige

Rm – Sp

Rechen-schaltg.

Zähler

Programmanordn.

Tor

(Tz)

R. Foth 3-3